# EUROPEAN PATENT SPECIFICATION

(11) **EP 3 141 130 B1**
(45) Date of publication and mention of the grant of the patent: **14.01.2026**
(21) Application number: 16188029.9
(22) Date of filing: 09.09.2016
(51) Int. Cl.: A23C 11/10, A23C 20/02, A23D 7/005

(54) **EDIBLE COMPOSITION MADE FROM SOYBEAN AND SUNFLOWER OIL**
EDIBLE ZUSAMMENSETZUNG AUS SOJABOHNEN- UND SONNENBLUMENÖL
COMPOSITION COMESTIBLE A BASE DE SOJA ET HUILE DE TOURNESOL

(30) Priority: 10.09.2015 IT UB20153520
(43) Date of publication of application: 15.03.2017
(73) Proprietor: Valsoia S.p.A, 40138 Bologna (BO) (IT)
(72) Inventor: PALOPOLI, Luigi Daniele, 40138 Bologna (IT); DONATIELLO, Rolando, 40138 Bologna (IT); MARANGONI, Matteo, 40138 Bologna (IT)
(74) Representative: Perani & Partners S.p.A.

(56) References cited:
- EP-A1- 2 769 624
- GB-A- 1 356 363
- US-A1- 2012 053 251
- DATABASE FSTA [online] INTERNATIONAL FOOD INFORMATION SERVICE (IFIS), FRANkFURT-MAIN, DE; 8 March 2004 (2004-03-08), BENEDET H D ET AL: "Development and characterization of "Minas Frescal" cheese analogues from milk and hydrosoluble soy extract mixture.", XP002753582, Database accession no. FS-2004-05-Pj0815
- DATABASE FSTA [online] INTERNATIONAL FOOD INFORMATION SERVICE (IFIS), FRANkFURT-MAIN, DE; 6 April 1999 (1999-04-06), MURAD H A ET AL: "Production of bifidus Kariesh cheese.", XP002753583, Database accession no. FS-1999-06-Pj0730

## Description

### FIELD OF THE INVENTION

The present invention relates to a solid or semisolid consistency edible composition comprising liquid soy extract and sunflower oil in combination with suitable thickening agents.

### PRIOR ART

Soy, a herbaceous annual plant belonging to the Leguminous family, is one of the most widely used plants for food preparation; originally cultivated in China and Japan, has become part of the Western diet by virtue of the high nutritional value contained in the seeds of the plant itself, from which oils and flours are derived for the production of healthy foods.

From the nutritional point of view, soy not only represents an excellent source of proteins easily assimilated, but also has one of the most complete amino acid spectrum, such that it can compete with foods such as meat, fish, eggs, milk and dairy products as a source of essential amino acids and proteins.

Soybeans have a very low content in saturated fatty acids and are naturally free of cholesterol; this makes them particularly advantageous in controlled diets and in the non-pharmacological approach to the reduction of blood cholesterol.

Soy proteins are in fact known for the cholesterol-lowering and cardiovascular system protective action; the fibers and proteins contained in soy have a dual effect on reducing circulating cholesterol, on the one hand reducing the macromolecule uptake at the intestine level and inhibiting the synthesis in the liver on the other hand.

For the above properties and for their vegetable origin, soybeans are widely used in the preparation of dietetic foods or food products compatible with vegetarian diets or diets free from food allergens, i.e. gluten and lactose.

Soy milk, for example, a vegetable alternative to cow's milk, contains no cholesterol and is an excellent source of lecithin and vitamin E; it can be taken by people who are lactose intolerant and has a high content of isoflavones, also responsible for the reduction of circulating lipoproteins.

Tofu is a solid food preparation produced from soy milk which once curdled, becomes a food preparation like cheese, which can be used as such or cooked.

Cheese-like preparations available on the market are numerous and various types; their preparation, differing in concentrations depending on the type of vegetable cheese to be made, contemplates for almost all preparations the mixing of soy proteins with vegetable fats such as coconut oil, palm oil and mixtures thereof.

The addition of these components to the formulation of the preparation is necessary not only for delivering soy proteins, but also to give consistency and flavor to the vegetable cheese, which otherwise would prove little palatable and appetizing than milk-based preparations.

*Wilmersburger* offers diverse vegetable alternatives to cow's cheese in preparations free from palm oil and soy proteins; the different compositions are in the form of Pizza Julien, Parallelepiped Cut and Slices and are characterized by a basic composition comprising non-hydrogenated coconut oil, modified starches and stabilizers.

The Cheezly line of *VBites* is dedicated to various types of vegetable cheeses prepared with soy proteins and non-hydrogenated palm oil, in combination with stabilizers and flavorings.

MozzaRisella and CreamyRisella are the products offered by *Frescolat* based on brown rice, water and vegetable oil, where the preferably used fatty part is coconut oil. EP2769624 by the same Applicant describes a semisolid or solid composition comprising fermented concentrate soy extract, pectin, sodium alginate, carrageenan and vegetable fats. GB 1 356 363 A discloses a process for the manufacture of protein-containing foodstuffs. US 2012/053251 A1 discloses fat emulsions. Benedet el al., Alimentos e Nutricao, vol.13, pages 11-22, 2002, discloses a Minas Frescal-type cheese. Murad et al., Deutsche Lebensmittel-Rundschau, vol.94, pages 409-412, 1998 discloses Kariesh cheeses.

Soy proteins are also the basis of the Sheese line products proposed by *Bute Island* which, by combining concentrated soy proteins with palm oil, water and other stabilizers, produces vegetable alternatives of the Edam and Mozzarella type.

Said coconut and palm oils are rich in saturated fatty acids, responsible for an increase in cholesterol in the blood and an increased cardiac risk; their presence in soy-based formulations is therefore not very suitable for making of vegetable dietetic cheese which may also meet the needs of consumers who want to control cholesterol values in blood.

The need for cheese-like formulations is therefore felt which are palatable to the consumer but without the problems drawbacks associated with the use of vegetable coconut and palm oils, harmful to health.

### SUMMARY OF THE INVENTION

The applicant has surprisingly found that edible compositions comprising liquid soy extract with a protein content of between 2.5% and 4.5% by weight on the total weight of the extract and sunflower oil in combination with suitable thickening agents wherein the compositions do not comprise coconut oil and palm oil, allow the preparation of vegetable cheese with a high nutritional value and low content of saturated fatty acids.

The specific combination of said composition with tapioca starch, carob seed flour and xanthan gum allows obtaining tasty vegetable cheeses, with a solid or semisolid consistency even though sunflower oil is liquid at room temperature.

### DETAILED DESCRIPTION OF THE INVENTION

The present invention is defined by the appended claims. Edible composition refers to an edible composition intended for food use.

The edible composition of the present patent application is a formulation of solid or semisolid consistency comprising liquid soy extract and sunflower oil in combination with suitable thickening agents, wherein semisolid consistency means a composition with a firm texture but soft, such as mozzarella or stracchino cheese.

For the purposes of the present invention, the liquid soy extract consists of an aqueous solution of soy with a protein content of between 2.5% and 4.5% by weight on the total weight of the liquid extract.

The composition of the present invention is formulated by mixing said soy extract in amounts ranging from 90% to 60% by weight on the total weight of the composition and sunflower oil in amounts ranging from 10% to 14% by weight on the total weight of the composition.

Sunflower oil, extracted from the seeds of *Helianthus annus,* essentially consists of unsaturated fatty acids, including oleic acid and linoleic acid, omega 3 and omega 6 fatty acid precursors; these components, important for the heart health, are particularly suitable for low-calorie diets and intended for control of blood cholesterol.

The low saturated fatty acids content, however, makes sunflower a vegetable fat that is difficult to process, since it is liquid at room temperature.

With a view to improving the nutritional and health value of its products, the Applicant has now found that solid or semisolid edible compositions is formulated using sunflower oil instead of coconut oil and palm oil, which are harmful to the health of the heart.

The Applicant has surprisingly found that the combination of modified tapioca starch, carob bean gum and xanthan gum thickening agents allows obtaining, in optimal concentrations, soy- and sunflower oil-based formulations of ideal consistency for making solid cheese wheels, palatable and with a high nutritional value.

For the purposes of the present invention, thickening agent is a substance compound able to increase the density of the food preparation.

The composition of the present application typically comprises modified tapioca starch, carob bean gum and xanthan gum as thickening agents.

More preferably, the above formulation comprises modified tapioca starch in amounts of from 1.8% to 6.0%, carob bean gum from 0.024% to 0.5% and xanthan gum from 0.024% to 0.5% by weight on the total weight of the composition.

For the purposes of the present application, with a view to formulating a cheese-like vegetable composition, the edible formulation is preferably enriched with calcium, normally present in food obtained from cow's milk.

More preferably, such a nutrient is contained in an amount of at least 120 mg of calcium per 100 g of total weight of the composition.

In the edible formulation of the present invention, calcium is preferably introduced in the form of tricalcium phosphate in order to enrich the food in micronutrients and thereby provide additional nutritional and health benefits.

Tricalcium phosphate is preferably added to the composition in amounts ranging between 0.12% and 0.4% by weight on the total weight of the composition.

A further importance for the preservation of the product is the pH of the finished product. Therefore, it may be advantageous to add acidity correctors such as lactic acid, citric acid or tartaric acid in amounts sufficient to bring the pH to between 5.1 and 5.5.

Preferably, the composition according to the invention comprises at least one acidity corrector selected from lactic acid, tartaric acid or citric acid.

In addition to these components, salifying agents and flavors may be added to the composition according to the invention, in order to adjust the flavor of the product or impart a stronger taste to it, more palatable to the consumer.

To this end, the edible formulation may be enriched with salt, sea salt, potassium chloride and flavorings in amounts sufficient to achieve the desired level of flavor.

In addition to the thickening agents mentioned above, the composition of the present invention may contain additional thickening agents such as carrageenan and modified potato starch, the presence of which is functional to the generation of specific food compositions, with more or less solid consistency depending on percentages contained therein.

In another aspect thereof, the present invention relates to the use of said composition for the preparation of vegetable cheeses.

Within the context of the present application, vegetable cheese is a food which by consistency, color and flavor intends to imitate the cheeses of animal origin; its formulation preferably comprises only vegetable components and it specifically lacks nutrients that can cause allergic reactions or intolerances, such as lactose and gluten. The vegetable cheese of the present invention is a food free of animal proteins and with no cholesterol, therefore suitable for vegetarian diets or low-calorie diets. Depending on the concentrations and the components contained in the formulation, the vegetable cheese may be produced in the various forms of ricotta-like/primosale, stracchino cheese-like and pasta filata cheese-like.

Within the context of the present application, ricotta-like/primosale means a semisolid, creamy consistency cheese that by color, flavor and consistency looks like cow's milk ricotta-like/primosale and which contains a composition according to the recipe of the present invention comprising tapioca starch between 1.8% and 2.2%, carob bean gum between 0.024% and 0.042%, xanthan gum between 0.024% and 0.042%, carrageenan between 0.12% and 0.14%, tricalcium phosphate between 0.3% and 0.4% by weight on the total weight of the composition.

Within the context of the present application, stracchino cheese-like/primosale means a creamy, spreadable consistency cheese that by color, flavor and consistency looks like stracchino-cheese of animal origin and which contains a composition according to the recipe of the present invention comprising tapioca starch between 3.9 % and 4.7 %, carob bean gum between 0.1 % and 0.123 %, xanthan gum between 0.1 % and 0.123 %, modified potato starch between 3.9 % and 4.7 %, tricalcium phosphate between 0.3% and 0.4% by weight on the total weight of the composition.

Within the context of the present application, pasta filata cheese-like refers to a solid, compact cheese that can be cut into slices and that by color, flavor and texture looks like the pasta filata cheeses of animal origin.

More precisely, the pasta filata cheese-like of the present invention contains a composition comprising tapioca starch from 5.0 % to 6.0 %, carob bean flour from 0.4 % to 0.5 %, xanthan gum from 0.4 % to 0.5 %, modified potato starch from 15.5 % to 18.7%, tricalcium phosphate from 0.3% to 0.4% by weight on the total weight of the composition.

In another aspect, the present invention relates to a process for producing said composition based on liquid soy extract, sunflower oil and thickening agents, comprising the following steps:
a. Adding the ingredients forming the edible composition to the liquid soy extract, standardized to the expected titer; except for the liquid soy extract and sunflower oil, both kept at a temperature of +2 °C/+4 °C, the other ingredients are at room temperature.
**b.** Mixing the mass of step **a.** at ambient pressure (P), at 100 RPM (Revolutions Per Minute) for a time necessary to incorporate all ingredients.
c. Vacuum mixing the mass obtained from step **b.** at 6500 RPM, at a vacuum of -300 mbar, for 30 minutes.
**d.** Packaging the composition obtained from step c. in a suitable container to obtain the desired shape.
**e.** Pasteurizing the product obtained from step **d.** in autoclave with a stop at 90° for 48 minutes.

The mixture for the production of ricotta-like/primosale and stracchino cheese-like obtained from step **c.** is packaged according to step d. in a polypropylene container with 5% EVOH (ethylene-polyvinyl alcohol) barrier with a thickness of 1 mm.

As regards the pastafilata cheese-like, the mixture obtained from step c. is filled according to step **d.** in a synthetic polyethylene gut, which is closed at both ends with a metal clamp.

The vegetable cheeses thus packaged can be pasteurized in their containers under the conditions described at step e. of the production process.

Embodiments of the present invention are described in the following examples given for illustrative and non-limiting purpose.

### EXAMPLES

Composition by weight expressed as a percentage by weight of the component on the total weight of the final composition.

The numbers indicated in the table, in the column on the left, specify the order in which the ingredients were added to the edible composition being prepared.

### Example 1: Ricotta-like/primosale edible composition

| | **Ingredient** | **%** |
|---|---|---|
| 1 | Liquid soy extract (3.5% w protein) | 84.616 |
| 2 | Refined sunflower oil | 12 |
| 3 | Modified tapioca starch | 2 (min 1.8 - max 2.2) |
| 4 | Sea salt | 0.5 |
| 5 | Tricalcium phosphate | 0.35 |
| 6 | Carrageenan | 0.132 (min 0.12 - max 0.144) |
| 7 | Carob bean flour | 0.036 (min 0.024 - max 0.042) |
| 8 | Xanthan gum | 0.036 (min 0.024 - max 0.042) |
| 9 | Potassium chloride | 0.036 (min 0.024 - max 0.042) |
| 10 | Flavorings | 0.144 |
| 11 | Lactic acid | 0.15 |
| | | |
| | Total | 100 |

### Example 2: Stracchino cheese-like edible composition

| | **Ingredient** | **%** |
|---|---|---|
| 1 | Liquid soy extract (3.5% w protein) | 78.056 |
| 2 | Sunflower oil | 12 |
| 3 | Modified tapioca starch | 4.3 (min 3.9 - max 4.7) |
| 4 | Modified potato starch | 4.275 (min 3.9 - max 4.7) |
| 5 | Xanthan gum | 0.1125 (min 0.1 - max 0.123) |
| 6 | Carob bean flour | 0.1125 (min 0.1 - max 0.123) |
| 7 | Salt | 0.5 |
| 8 | Tricalcium phosphate | 0.35 |
| 9 | Lactic acid | 0.15 |
| 10 | Flavorings | 0,144 |
| | | |
| | Total | 100 |

### Example 3: Pasta filata cheese-like edible composition

| | **Ingredient** | **%** |
|---|---|---|
| 1 | Liquid soy extract (3.5% w protein) | 62.3975 |
| 2 | Sunflower oil | 12.5 |
| 3 | Modified potato starch | 17.1 (min 15.5 - max 18.7) |
| 4 | Modified tapioca starch | 5.5 (min 5.0 - max 6.0) |
| 5 | Xanthan gum | 0.45 (min 0.4 - max 0.5) |
| 6 | Carob bean flour | 0.45 (min 0.4 - max 0.5) |
| 7 | Salt | 1 |
| 8 | Tricalcium phosphate | 0.35 |
| 9 | Lactic acid | 0.1625 |
| 10 | Flavorings | 0.09 |
| | | |
| | Total | 100 |

## Claims

1. Solid or semisolid consistency edible composition comprising liquid soy extract with a protein content of between 2.5% and 4.5% by weight on the total weight of the extract and sunflower oil in combination with suitable thickening agents, wherein the composition does not comprise coconut oil and palm oil.

2. Composition according to claim 1, wherein the liquid soy extract is between 90% and 60% by weight on the total weight of the composition and sunflower oil is between 10% and 14% by weight on the total weight of the composition.

3. Composition according to claim 1 or 2, comprising modified tapioca starch, carob bean gum and xanthan gum as thickening agents.

4. Composition according to claim 3, comprising tapioca starch from 1.8% to 6.0%, carob bean gum from 0.024% to 0.5%, xanthan gum from 0.024% to 0.5% by weight on the total weight of the composition.

5. Composition according to claim 1-4, comprising at least 120 mg of calcium per 100 g of total weight of the composition.

6. Composition according to claim 5, wherein calcium is in the form of tricalcium phosphate.

7. Composition according to any one of claims 1 to 6, comprising at least one of carrageenan, modified potato starch.

8. Use of the edible composition according to any one of claims 1 to 7 as vegetable cheese.

9. Vegetable cheese comprising the composition according to any one of claims 1 to 7.

10. Vegetable cheese according to claim 9 in the form of ricotta-like/primosale, stracchino cheese-like or pasta filata cheese-like.

11. Vegetable cheese according to claim 10, wherein the ricotta-like/primosale comprises tapioca starch from 1.8% to 2.2%, carob bean flour from 0.024% to 0.042%, xanthan gum from 0.024% to 0.042%, carrageenan from 0.12% to 0.14%, tricalcium phosphate from 0.3% to 0.4% by weight on the total weight of the composition.

12. Vegetable cheese according to claim 10, wherein the stracchino cheese-like comprises tapioca starch from 3.9 % to 4.7 %, carob bean flour from 0.1 % to 0.123 %, xanthan gum from 0.1 % to 0.123 %, modified potato starch from 3.9 % to 4.7 %, tricalcium phosphate from 0.3% to 0.4% by weight on the total weight of the composition.

13. Vegetable cheese according to claim 10, wherein the pasta filata cheese-like comprises tapioca starch from 5.0 % to 6.0 %, carob bean flour from 0.4 % to 0.5 %, xanthan gum from 0.4 % to 0.5 %, modified potato starch from 15.5 % to 18.7%, tricalcium phosphate from 0.3% to 0.4% by weight on the total weight of the composition.

14. Process for producing a composition according to any one of claims 1 to 8 comprising the steps of:
**a.** Mixing all ingredients at atmospheric pressure, at 100 RPM.
**b.** Vacuum mixing the mass obtained from step **a.** at 6500 RPM, at a vacuum of - 300 mbar, for 30 minutes.
c. Packaging the composition obtained from step **b.** in a suitable container to obtain the desired shape.
**d.** Pasteurizing the product obtained from step c. in autoclave with a stop at 90° for 48 minutes.

## Patentansprüche

1. Essbare Zusammensetzung mit fester oder halbfester Konsistenz, umfassend einen flüssigen Sojaextrakt mit einem Proteingehalt zwischen 2,5 Gew.-% und 4,5 Gew.-% bezogen auf das Gesamtgewicht des Extrakts und Sonnenblumenöl in Kombination mit geeigneten Verdickungsmitteln, wobei die Zusammensetzung kein Kokosöl und kein Palmöl umfasst.

2. Zusammensetzung nach Anspruch 1, wobei der flüssige Sojaextrakt zwischen 90 Gew.-% und 60 Gew.-% und das Sonnenblumenöl zwischen 10 Gew.-% und 14 Gew.-% ausmacht, jeweils bezogen auf das Gesamtgewicht der Zusammensetzung.

3. Zusammensetzung nach Anspruch 1 oder 2, umfassend modifizierte Tapiokastärke, Johannisbrotkernmehl und Xanthangummi als Verdickungsmittel.

4. Zusammensetzung nach Anspruch 3, umfassend Tapiokastärke von 1,8 Gew.-% bis 6,0 Gew.-%, Johannisbrotkernmehl von 0,024 Gew.-% bis 0,5 Gew.-% und Xanthangummi von 0,024 Gew.-% bis 0,5 Gew.-%, bezogen auf das Gesamtgewicht der Zusammensetzung.

5. Zusammensetzung nach einem der Ansprüche 1 bis 4, umfassend mindestens 120 mg Calcium pro 100 g des Gesamtgewichts der Zusammensetzung.

6. Zusammensetzung nach Anspruch 5, wobei das Calcium in Form von Tricalciumphosphat vorliegt.

7. Zusammensetzung nach einem der Ansprüche 1 bis 6, umfassend mindestens eines von Carrageen, modifizierter Kartoffelstärke.

8. Verwendung der essbaren Zusammensetzung nach einem der Ansprüche 1 bis 7 als pflanzlicher Käse.

9. Pflanzlicher Käse, umfassend die Zusammensetzung nach einem der Ansprüche 1 bis 7.

10. Pflanzlicher Käse nach Anspruch 9 in der Form von Ricotta-artigem/Primosale, Stracchino-Käse-artigem oder Pasta-Filata-Käse-artigem.

11. Pflanzlicher Käse nach Anspruch 10, wobei der Ricotta-artige/Primosale Tapiokastärke von 1,8 % bis 2,2 %, Johannisbrotkernmehl von 0,024 % bis 0,042 %, Xanthangummi von 0,024 % bis 0,042 %, Carrageen von 0,12 % bis 0,14 %, Tricalciumphosphat von 0,3 % bis 0,4 % in Gewichtsprozent bezogen auf das Gesamtgewicht der Zusammensetzung umfasst.

12. Pflanzlicher Käse nach Anspruch 10, wobei der Stracchino-Käse-artige Tapiokastärke von 3,9 % bis 4,7 %, Johannisbrotkernmehl von 0,1 % bis 0,123 %, Xanthangummi von 0,1 % bis 0,123 %, modifizierte Kartoffelstärke von 3,9 % bis 4,7 %, Tricalciumphosphat von 0,3 % bis 0,4 % in Gewichtsprozent bezogen auf das Gesamtgewicht der Zusammensetzung umfasst.

13. Pflanzlicher Käse nach Anspruch 10, wobei der Pasta-Filata-Käse-artige Tapiokastärke von 5,0 % bis 6,0 %, Johannisbrotkernmehl von 0,4 % bis 0,5 %, Xanthangummi von 0,4 % bis 0,5 %, modifizierte Kartoffelstärke von 15,5 % bis 18,7 %, Tricalciumphosphat von 0,3 % bis 0,4 % in Gewichtsprozent bezogen auf das Gesamtgewicht der Zusammensetzung umfasst.

14. Verfahren zur Herstellung einer Zusammensetzung nach einem der Ansprüche 1 bis 8, umfassend die Schritte:
a. Mischen aller Zutaten bei atmosphärischem Druck bei 100 U/min.
b. Vakuummischen der aus Schritt a. erhaltenen Masse bei 6500 U/min bei einem Vakuum von -300 mbar für 30 Minuten.
c. Verpacken der aus Schritt b. erhaltenen Zusammensetzung in einem geeigneten Behälter, um die gewünschte Form zu erhalten.
d. Pasteurisieren des aus Schritt c. erhaltenen Produkts in einem Autoklaven mit einer Haltezeit bei 90° für 48 Minuten.

## Revendications

1. Composition comestible de consistance solide ou semi-solide comprenant un extrait de soja liquide ayant une teneur en protéines comprise entre 2,5 % et 4,5 % en poids par rapport au poids total de l'extrait et de l'huile de tournesol en combinaison avec des agents épaississants appropriés, dans laquelle la composition ne comprend pas d'huile de coco et d'huile de palme.

2. Composition selon la revendication 1, dans laquelle l'extrait de soja liquide est compris entre 60 % et 90 % en poids par rapport au poids total de la composition et l'huile de tournesol est comprise entre 10 % et 14 % en poids par rapport au poids total de la composition.

3. Composition selon la revendication 1 ou 2, comprenant de l'amidon de tapioca modifié, de la gomme de caroube et de la gomme de xanthane en tant qu'agents épaississants.

4. Composition selon la revendication 3, comprenant de l'amidon de tapioca de 1,8 % à 6,0 %, de la gomme de caroube de 0,024 % à 0,5 %, de la gomme de xanthane de 0,024 % à 0,5 % en poids par rapport au poids total de la composition.

5. Composition selon l'une quelconque des revendications 1 à 4, comprenant au moins 120 mg de calcium pour 100 g de poids total de la composition.

6. Composition selon la revendication 5, dans laquelle le calcium est sous la forme de phosphate tricalcique.

7. Composition selon l'une quelconque des revendications 1 à 6, comprenant au moins l'un parmi le carraghénane et l'amidon de pomme de terre modifié.

8. Utilisation de la composition comestible selon l'une quelconque des revendications 1 à 7 en tant que fromage végétal.

9. Fromage végétal comprenant la composition selon l'une quelconque des revendications 1 à 7.

10. Fromage végétal selon la revendication 9 sous la forme de type ricotta/primosale, de type stracchino ou de type pâte filée.

11. Fromage végétal selon la revendication 10, dans lequel le fromage de type ricotta/primosale comprend de l'amidon de tapioca de 1,8 % à 2,2 %, de la farine de graines de caroube de 0,024 % à 0,042 %, de la gomme de xanthane de 0,024 % à 0,042 %, du carraghénane de 0,12 % à 0,14 %, du phosphate tricalcique de 0,3 % à 0,4 % en poids par rapport au poids total de la composition.

12. Fromage végétal selon la revendication 10, dans lequel le fromage de type stracchino comprend de l'amidon de tapioca de 3,9 % à 4,7 %, de la farine de graines de caroube de 0,1 % à 0,123 %, de la gomme de xanthane de 0,1 % à 0,123 %, de l'amidon de pomme de terre modifié de 3,9 % à 4,7 %, du phosphate tricalcique de 0,3 % à 0,4 % en poids par rapport au poids total de la composition.

13. Fromage végétal selon la revendication 10, dans lequel le fromage de type pâte filée comprend de l'amidon de tapioca de 5,0 % à 6,0 %, de la farine de graines de caroube de 0,4 % à 0,5 %, de la gomme de xanthane de 0,4 % à 0,5 %, de l'amidon de pomme de terre modifié de 15,5 % à 18,7 %, du phosphate tricalcique de 0,3 % à 0,4 % en poids par rapport au poids total de la composition.

14. Procédé de production d'une composition selon l'une quelconque des revendications 1 à 8, comprenant les étapes consistant à :
a. Mélanger tous les ingrédients à pression atmosphérique, à 100 tr/min.
b. Mélanger sous vide la masse obtenue à l'étape a. à 6500 tr/min, sous un vide de - 300 mbar, pendant 30 minutes.
c. Conditionner la composition obtenue à l'étape b. dans un récipient approprié pour obtenir la forme souhaitée.
d. Pasteuriser le produit obtenu à l'étape c. en autoclave avec un palier à 90° pendant 48 minutes.
